**Europäisches Patentamt**

**European Patent Office**

**Office européen des brevets**

(19)

(11) Veröffentlichungsnummer: **0 382 846**

**A1**

(12)

# EUROPÄISCHE PATENTANMELDUNG
## veröffentlicht nach Art. 158 Abs. 3 EPÜ

(21) Anmeldenummer: **88909003.1**

(22) Anmeldetag: **25.07.88**

(86) Internationale Anmeldenummer:
**PCT/SU88/00145**

(87) Internationale Veröffentlichungsnummer:
**WO 90/01161 (08.02.90 90/04)**

(51) Int. Cl.5: **G01N 27/36**

(43) Veröffentlichungstag der Anmeldung:
**22.08.90 Patentblatt 90/34**

(84) Benannte Vertragsstaaten:
**CH DE FR GB LI NL**

(71) Anmelder: **ERSHOV, Oleg Sergeevich**
**pr. Lunacharskogo, 100-23**
**Leningrad, 195267(SU)**

Anmelder: **LEPNEV, Gerasim, Panteleimonovich**
**ul. Zoi Kosmodemyanskoi, 3-17**
**Leningrad, 198095(SU)**

Anmelder: **GREKOVICH, Tamara Mikhailovna**
**pr. Morisa Toreza, 30-133**
**Leningrad, 194021(SU)**

Anmelder: **SHULTS, Mikhail, Mikhailovich**
**pr. Engelsa, 63-3-51**
**Leningrad, 194017(SU)**

(72) Erfinder: **ERSHOV, Oleg Sergeevich**
**pr. Lunacharskogo, 100-23**
**Leningrad, 195267(SU)**
Erfinder: **LEPNEV, Gerasim, Panteleimonovich**
**ul. Zoi Kosmodemyanskoi, 3-17**
**Leningrad, 198095(SU)**
Erfinder: **GREKOVICH, Tamara Mikhailovna**
**pr. Morisa Toreza, 30-133**
**Leningrad, 194021(SU)**
Erfinder: **SHULTS, Mikhail, Mikhailovich**
**pr. Engelsa, 63-3-51**
**Leningrad, 194017(SU)**

(74) Vertreter: **Patentanwälte Zellentin & Partner**
**Zweibrückenstrasse 15**
**D-8000 München 2(DE)**

EP 0 382 846 A1

(54) **GLASELEKTRODE ZUR MESSUNG DER IONENAKTIVITÄT IN EINER LÖSUNG.**

(57) Eine Glaselektrode enthält eine Membran (2) aus ionenleitendem Alkaliglas, deren Innenfläche mit einem Feststoff (3) überzogen ist, und einem stromleitenden Element (4), das mit dem Stoff Kontakt hat. Der Überzugsstoff (3) enthält ein Alkalimetall, das zur Zusammensetzung des Membranglases gehört und ein Nichtalkalimetall, das aus der Gruppe Zinn, Indium gewählt wird. Die Alkali- und Nichtalkalimetalle weisen ein Molverhältnis von 0,01 bis 0,2 auf.

FIG.1

# GLASELEKTRODE ZUM MESSEN DER IONENAKTIVITÄT IN EINER LÖSUNG

## Gebiet der Technik

Die Erfindung bezieht sich auf die Ionometrie, d.h. die Ermittlung der Aktivität (der aktiven Konzentration) von Ionen in Lösungen und insbesondere auf Glaselektroden zum Messen der Aktivität von Ionen ($H^+$, $Na^+$ usw.) in Lösungen. Messungen der Ionenaktivität werden in der Laborpraxis sowie in technologischen Prozessen mehrerer Industriezweige, wie Nahrungsmittel-, Zellstoff- und Papierindustrie, mikrobiologische, pharmakologische Industrie usw. in einem großen Umfang durchgeführt.

## Stand der Technik

Die Ermittlung der Ionenaktivität in einer Lösung erfolgt, indem man eine Potentialdifferenz zwischen einer Glas- und einer Bezugselektrode mißt. Die Abhängigkeit des Potentials der Glaselektrode von der Ionenaktivität in einer Lösung wird nach der bekannten Nernstschen Formel bestimmt (K.Kamman, "Rabota s ionoselektivnymi elektrodami", 1980, Mir, Moskau, S.26, 254 bis 259):

$$\varphi = \varphi^{\,0} + \frac{RT}{Z_i F}\, \ln a_i, \qquad a_i = m_i \gamma_i$$

wobei

$a_i$    Aktivität eines Ions $i$ in einer Lösung,

$m_i$    Konzentration eines Ions $i$ ,

$\gamma_i$    Aktivitätskoeffizient eines Ions,

$\varphi^0$    Elektrodenpotential in einer Lösung mit $a_i = 1$,

R    Gaskonstante,

F    Faraday-Konstante,

T    absolute Temperatur und

$Z_i$    Ladung eines Ions $i$ bedeuten.

Das Potential der Bezugselektrode weist keine Abhängigkeit vom $a_i$ - Wert auf.

Damit eine genaue Ermittlung der Ionenaktivität in einer Lösung mit Hilfe der besagten Elektroden bei deren Daueranwendung gewährleistet ist, werden an jede Elektrode Anforderungen in bezug auf die Stabilität des Potentials über die Zeit (Stabilität der Elektrodenfunktion), d.h. die Konstanz seines Wertes bei einer unveränderlichen Ionenaktivität der zu messenden Lösung und in bezug auf die Austauschbarkeit, d.h. auf die Ähnlichkeit von Kennzahlen einzelner Elektroden derselben Konstruktion gestellt. Außerdem haben Elektroden die Messung der Ionenaktivität in einem weiten Temperaturbereich zu ermöglichen.

Die bekannten Glaselektroden stellen in der Regel ein zylindrisches Glasgehäuse dar, an dessen einem Ende eine Membran aus einem ionenleitenden Alkaliglas angeschweißt ist.

Die Innenfläche der Membran kontaktiert mit einem bestimmten Stoff (Metall, Legierung bzw. Elektrolyt), der seinerseits mit Hilfe eines stromleitenden Elementes an ein Meßgerät angeschlossen ist.

Die Betriebsstabilität der Elektroden und deren Austauschbarkeit werden vor allem durch die Zusammensetzung des Stoffes bestimmt, der mit der Innenfläche der Membranen Kontakt hat.

Es ist eine Glaselektrode zum Messen der Ionenaktivität in einer Lösung bekannt, worin die Membraninnenfläche einen Kontakt mit einem Elektrolyt - einer Lösung von Wasserstoff- und Chlorionen einer bestimmten Konzentration in Wasser- hat (K.Kamman, "Rabota s ionoselektivnymi elektrodami", 1980, Mir, Moskau, S.67 bis 76).

In dieser Elektrode finden an den Grenzen Glasmembraninnere Lösung und innere Lösung- stromleitendes Element Potentialsprünge (innere Potentialsprünge) statt. Damit die Betriebsstabilität einer Elektrode sichergestellt ist, ist es erforderlich, daß die Summe dieser inneren Potentialsprünge im Laufe des Elektrodenbetriebs konstant bleibt, d.h. sich das Membranglas und die mit diesem kontaktierende innere Lösung im elektrochemischen Gleichgewicht befinden.

Da in dieser Elektrode die Zusammensetzung der Lösung infolge Wechselwirkung dieser Lösung mit dem Glas allmählich geändert wird, ändern sich demgemäß auch die inneren Sprünge der Elektrodenpotentiale, d.h. es findet eine Drift der inneren Potentiale statt. Dabei nimmt die Drift der inneren Potentiale bei einer Steigerung der Temperatur der Lösung stark zu.

Die Drift der inneren Potentiale macht diese Elektrode zu einer unzureichend stabilen. Die bedeutende Driftsteigerung bei Erhöhung der Lösungstemperatur vermindert die Zweckmäßigkeit der Anwendung dieser Elektrode bei gesteigerten Temperaturen.

Da außerdem die Drift der inneren Potentiale bei verschiedenen Einzelelektroden verschieden ist, liegt keine Austauschbarkeit dieser Elektroden vor.

Außerdem ist es unmöglich, diese Glaselektroden unter Bedingungen einer starken radioaktiven Strahlung infolge einer Radiolyse des Wassers einzusetzen, die eine bedeutende Vergrößerung des Meßfehlers bewirkt.

Es ist eine Glaselektrode zur Messung einer Ionenaktivität in einer Salzschmelze bekannt, worin der innere Membranraum mit einer flüssigen Natrium-Zinn-Legierung gefüllt ist (A.F.Alabyshev u.a., "Elektrody sravnenia dlya rasplavlennykh solej", 1965, Metallurgia , Moskau, S.91 bis 100).

Diese Elektroden können aber nur einmal bei Temperaturen über 300 bis 400 °C verwendet werden, weil bei niedrigeren Temperaturen, wenn die Schmelze erstarrt, ein Zerspringen der Membran erfolgt.

Es ist eine Glaselektrode zum Messen der Ionenaktivität in einer Lösung bekannt, worin die innere Membranfläche mit einem Metall (Silber, Antimon, Chrom usw.) bedeckt ist (zhurnal prikladnoi khimii, Bd.54, Nr.4, 1981, April, Leningrad, O.S.Ershov "Steklyannye elektrody s kontaktom iz napylennogo metalla", S.830 bis 834).

Man wählt ein Metall , das auf die Membran einfach und leicht aufzutragen ist.

Diese Elektroden fanden aber keine praktische Anwendung, da in Metallen keine Ionen vorhanden sind, die über die Phasengrenze Überzug-Glas leicht wandern können; somit sind Elektroden mit innerem Überzug aus diesen Substanzen unstabil im Betrieb und nicht austauschbar.

Aus dem gleichen Grunde weisen diese Elektroden eine niedrige Geschwindigkeit der Einstellung des Gleichgewichtspotentials nach der Änderung der Temperatur und anderer Außenbedingungen auf, wodurch ihre praktische Anwendung stark begrenzt ist.

Zum Stand der Technik gehört eine Glaselektrode, die eine Membran aus Natriumsilikatglas enthält. Die innere Membranfläche ist mit reinem Natrium bedeckt, das mit einem stromleitenden Element kontaktiert. Reines Natrium wird auf die Membranoberfläche aufgetragen, indem man seine Schmelze in die Elektrode eingießt und die Schmelze bis zum Erstarren abkühlen läßt (Zeitschrift für Elektrochemie, V.30, Nr.3, 1924, (Weinheim), Trümpler G. "Über eine neue Bestimmungsweise der Potentiale der Alkalimetalle", S.103 bis 109).

Da in diesen Elektroden der Stoff des Überzugs der inneren Membranfläche die im Glas beweglichen Natriumionen enthält, die instande sind, über die Phasengrenze Überzug-Glas leicht zu wandern, und die Konzentration dieser Ionen sehr hoch, konstant und gleich in allen Elektroden ist, d.h. sich Glas und Natrium im elektrochemischen Gleichgewicht befinden, sollen diese Elektroden eine hohe Stabilität und eine Austauschbarkeit aufweisen.

Diese Elektroden kamen aber zu keinem praktischen Einsatz, weil ihre Anwendung zum Messen der Ionenaktivität in Wasserlösungen gefährlich ist, weil bei der Zerstörung der dünnwandigen Glasmembran und beim Kontakt von Natrium mit Wasser eine heftige Reaktion (eine Mikroexplosion) zustande kommt.

Der Erfindung liegt die Aufgabe zugrunde, eine Glaselektrode zum Messen der Ionenaktivität in einer Lösung zu schaffen, bei der der Stoff des Überzugs der inneren Fläche der Glasmembran eine Zusammensetzung hat, daß eine hohe Betriebstabilität der Elektrode im weiten Temperaturbereich, eine Austauschbarkeit und eine gefahrlose Elektrodenanwendung sichergestellt werden.

Diese Aufgabe wird dadurch gelöst, daß bei einer bekannten Glaselektrode zum Messen der Ionenaktivität in einer Lösung, mit einer Membran aus ionenleitendem Alkaliglas, deren Innenfläche mit einem Feststoff überzogen ist, der ein zur Zusammensetzung des Membranglases gehörendes Alkalimetall enthält, und einem stromableitenden Element, das mit dem besagten Stoff kontaktiert, erfindungsgemäß der Überzugsstoff zusätzlich ein Nichtalkalimetall aus der Gruppe Zinn, Indium enthält, wobei das Alkali-und das Nichtalkalimetall ein Molverhältnis von 0,01 bis 0,2 aufweisen.

Da in dieser Glaselektrode ein Überzugsstoff der inneren Membranfläche die im Glas beweglichen Ionen eines Alkalimetalls enthält, die über die Phasengrenze Überzug-Stoff leicht wandern können, und die Konzentration dieser Ionen sehr hoch und in allen Elektroden konstant ist, d.h. sich Glas und Alkalimetall im elektrochemischen Gleichgewicht befinden, weisen diese Elektroden eine hohe Stabilität und eine Austauschbarkeit auf.

Das Vorhandensein eines Nichtalkalimetalls in einem Überzugsstoff ermöglicht es, die Glaselektrode in einer breiten Praxis zum Messen der Ionenaktivität in Wasserlösungen anzuwenden, weil dadurch eine heftige Reaktion des Überzugsstoffes mit Wasser im Falle einer Zerstörung der Glasmembran ausgeschlossen ist.

Der Kreis von Nichtalkalimetallen ist aufgrund ihrer Schmelztemperatur gewählt, die unter der Erweichungstemperatur des Alkaliglases einer Membran (400 bis 500 $^{o}$C in Abhängigkeit von der Glaszusammensetzung) liegen soll. Diese Anforderung ist dadurch bedingt, daß der Überzug auf die Innenfläche der Membran aus einer Schmelze aufgetragen wird und die Erweichung des Membranglases eine Membranverformung bewirkt, was unzulässig ist.

Obwohl dieser an die Schmelztemperatur gestellten Anforderung auch andere Nichtalkalimetalle, z.B. Kadmium, Blei, Thallium, Gallium genügen, ist es infolge verhältnismäßig kleiner Plastizität ihrer Legierungen unzweckmäßig, diese in Glaselektroden anzuwenden, weil Elektroden durch gesteigerte Spannungen an der Grenze Überzug-Glas öfters zu Bruch gehen.

Wie Versuche erweisen, beginnt sich bei einem Molverhältnis des Alkali- und des Nichtalkalimetalls unter 0,01 die Stabilität und die Austauschbarkeit der Elektroden zu verkleinern und bei einem Molverhältnis dieser Bestandteile über 0,2 nimmt die Plastizität des Überzugsstoffes ab, wodurch die Wahrscheinlichkeit der Elektrodenzerstörung stark gesteigert wird.

Die vorstehend genannten Vorteile und Merkmale der Erfindung werden bei der nachstehenden ausführlichen Beschreibung eines Ausführungsbeispiels unter Bezugnahme auf Zeichnungen näher erläutert. Es zeigen

　　　Fig.1 eine erfindungsgemäße Glaselektrode im Schnitt und

　　　Fig.2 Zeitdiagramme von Potentialänderungen verschiedener Elektroden.

Eine Elektrode enthält ein hohles Gehäuse 1, das aus einem isolierenden Glas (Glas für chemische Labors) hergestellt ist. An das eine Ende des zylindrischen Gehäuses 1 ist eine kalottenförmige Membran 2 angeschweißt, die aus ionenleitendem Alkaliglas hergestellt ist, das Natrium- bzw. Lithiumoxid enthält. Das Glas der Membran 2 kann anstelle von Natrium- bzw. Lithiumoxid Oxide anderer Alkalimetalle enthalten, doch dies ist unzweckmäßig, weil Ionen dieser Metalle im Membranglas weniger beweglich sind.

Auf die Innenfläche der Membran 2 ist ein Überzug 3 aus einem Feststoff aufgetragen, der eine Legierung eines Alkali- und eines Nichtalkalimetalls in einem Molverhältnis von 0,01 bis 0,2 darstellt. Dabei enthält der Überzug 3 als Alkalimetall ein Metall, dessen Oxid zur Glaszusammensetzung der Membran 2 gehört. Aus diesem Grunde befinden sich das Glas der Membran 2 und der Stoff des Überzugs 3 im elektrochemischen Gleichgewicht, das eine hohe Stabilität und eine Austauschbarkeit dieser Elektroden sicherstellt. Als Nichtalkalimetall enthält der Stoff des Überzugs 3 Zinn bzw. Indium, d.h. eines der Metalle, deren Schmelztemperatur unter der Erweichungstemperatur des Alkaliglases liegt und deren Plastizität verhältnismäßig hoch ist, wodurch keine gesteigerte Spannungen an der Grenze Überzug-Glas bei der Elektrodenherstellung entstehen und folglich die Elektrodenzerstörung ausgeschlossen ist. Ein stromleitendes Element 4 aus einem Draht , der aus einem Stoff mit einem thermischen Ausdehnungskoeffizienten hergestellt ist, der dem eines Glases nahe liegt, z.B. aus einer Platinverbindung. Dieser Draht ist mit dem einen Ende an den Stoff des Überzugs 3 zur Herstellung eines elektrischen Kontaktes zwischen ihnen und mit dem anderen Ende an ein externes Meßgerät (nicht dargestellt) angeschlossen. An der Austrittsstelle des stromleitenden Elementes 4 aus dem Gehäuse 1 ist eine vakuumdichte Lötstelle 5 vorhanden. Der Innenraum des Gehäuses 1 ist evakuiert.

Es ist eine Ausführungsvariante der Glaselektrode möglich, bei der der Innenraum nicht evakuiert, sondern mit einem in bezug auf einen Überzugsstoff inerten Medium, z.B. Öl gefüllt ist.

Der Überzug 3 wird auf die Membraninnenfläche wie folgt aufgetragen.

In eine Glaselektrode bringt man eine eingewogene Menge einer im voraus zubereiteten Legierung, die ein Alkali- und ein Nichtalkalimetall in einem Molverhältnis von 0,01 bis 0,2 enthält, und das aus einem Draht bestehende stomableitende Element 4 ein, und läßt dabei den Draht eine Elektrodenwand berühren. Dann erwärmt man die Glaselektrode mit der eingebrachten Einwaage und dem/Draht z.B. in einem Muffelofen auf eine Temperatur von 400 bis 500°C, die größer als die Schmelztemperatur der Legierung und kleiner als die Erweichungstemperatur des Glases ist. Nachdem die Einwaage vollkommen geschmolzen ist, wird die Glaselektrode abgekühlt, dabei verteilt man die erstarrende Schmelze in einer dünnen Schicht über die Membranfläche, indem man die Glas-

elektrode dreht und schüttelt. Gleichzeitig bekommt die erstarrte Legierung einen Kontakt mit dem Draht.

Die Einwaage der Legierung für eine Elektrode wird unter der Bedingung gewählt, daß die ganze Membranfläche mit einem Überzug bedeckt sein soll. Für herkömmliche Elektroden mit einem Durchmesser von ca. 1 cm beträgt sie ca. 0,5 bis 0,6 g.

Wenn die Legierung beim Auftragen eines Überzugs aus einer homogenen Schmelze erstarrt, entstehen zwei feste Phasen: eine intermetallische Verbindung eines Alkali- und eines Nichtalkalimetalls, z.B. LiIn, und eine feste Lösung, in diesem Beispiel eine Lithiumlösung in Indium, wobei die Konzentration des Alkalimetalls in der festen Lösung klein und konstant ist, da dessen Überschuß als intermetallische Verbindung vorliegt. Die beiden festen Phasen sättigen sich wechselseitig, und die Zusammensetzung der Legierung bestimmt ein Volumenverhältnis zweier fester Phasen in der Schmelze, doch keine ihrer chemischen Eigenschaften .Dadurch wird die Unabhängigkeit eines Elektrodenpotentials von der Zusammensetzung der Legierung im weiten Bereich der Komponentenverhältnisse, einschließlich des erfindungsgemäßen Bereichs, d.h. die Austauschbarkeit der Elektroden mit dem inneren festen Überzug aus einer Legierung ein und derselben Natur bestimmt, die ein Alkali- und ein Nichtalkalimetall in einem Molverhältnis von 0,01 bis 0,2 enthält.

Da das Alkalimetall chemisch gebunden ist, ist seine Aktivität stark herabgesetzt, wodurch eine gefahrlose Anwendung (keine Mikroexplosionen bei einer Berührung der Legierung mit Wasser bei einer Zerstörung der Glasmembran) der Elektroden mit einem inneren Überzug aus diesen Legierungen in Wasserlösungen bewirkt ist.

Die Tabelle 1 enthält Versuchsdaten, in denen Aktivitätsanteile der erfindungsgemäßen Legierungen aus Alkali- und Nichtalkalimetallen in bezug auf die Aktivität der entsprechenden Alkalimetalle angegeben sind.

Tabelle 1

| Metall | Aktivität | Aktivitätsanteil einer Legierung | | | |
|--------|-----------|--------|--------|--------|--------|
|        |           | Li+In | Li+Sn | Na+In | Na+Sn |
| Li | 1 | $10^{-10,5}$ | $10^{-12,6}$ | | |
| Na | 1 | | | $10^{-7,0}$ | $10^{-9,7}$ |

Um sich davon zu vergewissern, daß man die erfindungsgemäßen Glaselektroden ohne Gefahr handhaben kann, beschädigte man absichtlich mehrere Elektroden mit verschiedenen Legierungen (es wurden Membranen zerschlagen). Dabei beobachtete man keine heftige Reaktion eines Alkalimetalls mit Wasser.

Die physikalischen Eigenschaften einer Legierung, unter anderem ihre Plastizität und Schmelztemperatur, hängen von der Zusammensetzung der Legierung ab. Bei Vergrößerung des Alkalimetallgehalts einer Legierung nimmt die Plastizität dieser Legierung ab, weil alle intermetallischen Verbindungen spröde Substanzen sind. Wie aber Versuche erwiesen haben, bleibt beim maximalen Wert des Molverhältnisses eines Alkali- und eines Nichtalkalimetalls gleich 0,2 die Plastizität der Legierung ausreichend hoch, wodurch eine Elektrodenzerstörung verhindert wird. Außerdem nimmt bei Vergrößerung des Alkalimetallgehaltes der Legierung die Schmelztemperatur der Legierung im Vergleich mit der Schmelztemperatur des Nichtalkalimetalls bis auf solche Werte zu, bei denen das Membranglas gegenüber der zu messenden Lösung noch beständig ist, wodurch der Temperaturbereich erweitert wird, worin man die Elektroden einsetzen kann.

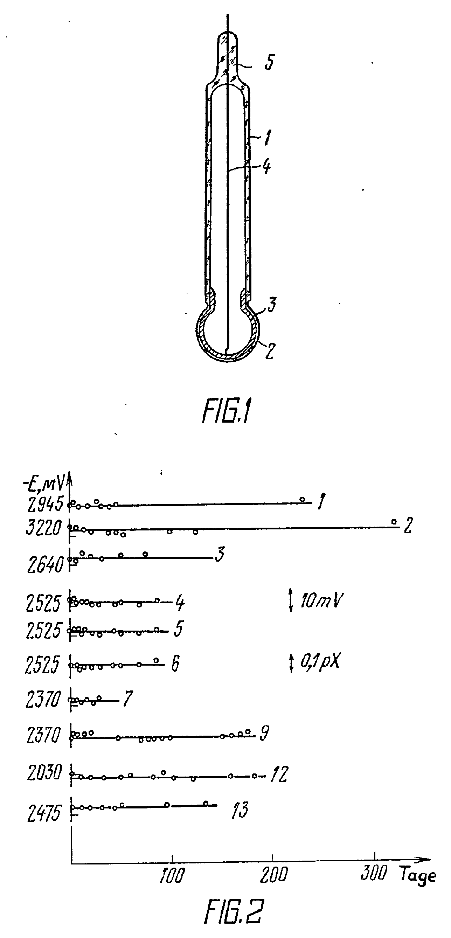

In Tabelle 2 und in Fig.2 sind Ergebnisse aus Untersuchungen von Glaselektroden mit Membranen aus verschiedenen Glassorten und mit inneren Überzügen aus reinen Alkalimetallen (dabei sind Lithiumelektroden zum ersten Mal hergestellt) und aus ihren Legierungen mit Indium und Zinn bei verschiedenen Komponentenverhältnissen angegeben. Die Diagramm-Nr. in Fig. 2 entsprechen den Zeilen-Nr. in Tabelle 2.

Summarische Daten der Abhängigkeit
des Glaselektrodenpotentials von der Zeit

| Lfd. Nr. | Membran-glas typ | Zu er-mitteln-des Ion | Stoff des Membranüber-zugs, Molan-teile des Alkalime-talls | Beo-bacht-ungs-zeit, Tage | Potential gegen Cl-Ag-Bezugselekt-rode, mV | Winkelkoef-fizient, mV/Tag |
|---|---|---|---|---|---|---|
| 1 | I | Na$^+$ | Na metall. | 233 | -2344,29±0,35 | -0,007±0,004 |
| 2 | III | Li$^+$ | Li metall. | 321 | -3224,17±0,2 | 0,002±0,0006 |
| 3 | II | H$^+$ | dito | 74 | -2643,96±0,94 | -0,01±0,02 |
| 4 | I | Na$^+$ | InNa 0,05 | 84 | -2523,93±0,23 | 0,0004±0,006 |
| 5 | I | Na$^+$ | InNa 0,1 | 84 | -2528,32±0,24 | -0,006±0,007 |
| 6 | I | Na$^+$ | InNa 0,2 | 84 | -2522,82±0,29 | -0,03±0,008 |
| 7 | I | Na$^+$ | SnNa 0,01 | 27 | -2371,59±0,50 | 0,002±0,01 |
| 8 | I | Na$^+$ | SnNa 0,05 | 85 | -2373,84±0,21 | 0,001±0,005 |
| 9 | I | Na$^+$ | SnNa 0,1 | 173 | -2369,06±0,23 | 0,006±0,002 |
| 10 | III | Li$^+$ | InLi 0,1 | 77 | -2600,35±0,43 | 0,03±0,009 |
| 11 | III | Li$^+$ | InLi 0,2 | 78 | -2602,70±0,52 | 0,02±0,01 |
| 12 | II | H$^+$ | InLi 0,2 | 185 | -2028,87±0,45 | 0,009±0,005 |
| 13 | III | Li$^+$ | SnLi 0,05 | 73 | -2477,6±0,43 | -0,02±0,01 |
| 14 | III | Li$^+$ | SnLi 0,15 | 14 | -2480,0±0,25 | -0,1±0,03 |

Membranglaszusammensetzung (Molanteile)

Typ I   : Na$_2$O 0,25; B$_2$O$_3$ 0,09; Al$_2$O$_3$ 0,05; SiO$_2$ Rest;
Typ II  : Li$_2$O 0,26; BaO 0,04; Na$_2$O$_3$ 0,04; SiO$_2$ Rest;
Typ III : Li$_2$O 0,24; Al$_2$O$_3$ 0,1; SiO$_2$ Rest.

Elektroden mit einem Innenüberzug aus Legierungen, die im Vergleich mit Indium und Zinn höher schmelzende Nichtalkalimetalle enthalten, und zwar Blei und Kadmium, wurden auch untersucht und zeigten der Stabilität der Potentiale nach ähnliche Ergebnisse, doch diese Legierungen wiesen eine kleine Plastizität auf und die Elektroden wurden öfters infolge von Spannungen an der Grenze Legierung-Glas zerstört.

Man tauchte Elektroden in Lösungen mit Pufferwirkung in bezug auf jenes Ion ein, für das das Membranglas spezifisch ist, wobei in den Lösungen der Temperaturkoeffizient des Potentials klein ist. Dies sind Lösungen: 0,1 Mol/l Salzsäure für Elektroden mit einer $H^+$ - Funktion, 0,3 Mol/l Natriumchlorid für Elektroden, die auf $Na^+$ - Ionen ansprechen, und 1 Mol/l Lithiumchlorid für Lithiumelektroden.

Elektrodenpotentiale wurden in bezug auf eine chlorsilberne Bezugselektrode mit gesättigter Kaliumchloridlösung gemessen. Man maß dabei die Potentiale zuerst oft, dann seltener und nach längerer Aufbewahrungszeit ersetzte man die Lösungen durch frische vor jeder neuen Messung (Fig.2).

Elektroden jeder Art stellte man in einer Stückzahl von wenigstens drei her, sie unterschieden sich voneinander zu jedem Beobachtungszeitpunkt nicht mehr als um 2 bis 3 mV. Dabei wiesen die Elektroden mit einem Innenüberzug aus reinem Alkalimetall gleiche Ergebnisse in bezug auf Stabilität und Austauschbarkeit, wie die Elektroden mit einem Innenüberzug aus den erfindungsgemäßen Legierungen.

Die in der Spalte 7 der Tabelle 2 angegebenen Größen sind nach dem Verfahren der kleinsten Quadrate anhand der Beobachtungsdaten über die Zeit berechnet, die in der Spalte 5 angegeben ist. Aus diesen Daten ist es ersichtlich, daß der Winkelkoeffizient der Abhängigkeit des Elektrodenpotentials von der Zeit erstens der absoluten Größe nach klein ist und zwar je kleiner , desto größer das Intervall der Beobachtungszeit ist , zweitens ein Vorzeichen mit Zufallscharakter hat und drittens einen Meßfehler aufweist, der mit der Größe des Winkelkoeffizienten vergleichbar oder sogar größer als dieser ist. Aus diesen Gründen kann man den Winkelkoeffizient gleich Null annehmen.

Auf diese Weise folgt aus Fig.2 und Tabelle 2, daß die Elektroden mit einem Innenüberzug aus den Legierungen (Nummern 4 bis 14) wie auch die Elektroden mit einem Innenüberzug aus reinen Alkalimetallen (Nummern 1 bis 3) eine hohe Stabilität der Potentiale und eine hohe Austauschbarkeit aufweisen, wenn man als Stoff für den inneren Membranüberzug

Legierungen ein und desselben Typs (Nummern 4 bis 6 bzw. 7 bis 9) unabhängig vom __Alkalimetallgehalt__ in der erfindungsgemäßen Legierung verwendet.

Es ist darauf hinzuweisen, daß das Vorhandensein des reinen Alkalimetalls bzw. der Legierung auf der inneren Membranseite der Glaselektrode keine Auswirkungen auf der Außenseite einer Membran hat. Alle Elektroden wiesen im Laufe der ganzen Beobachtungszeit eine Funktion mit einer Nernstschen Neigung bezüglich der in der Spalte 3 angeführten Ionen in Übereinstimmung mit einer in der Spalte 2 angegebenen Glaszusammensetzung auf. Darum sind die Potentiale der Elektroden mit $H^+$-Funktion (Nummern 3 und 12 in der Tabelle 2) positiver, als die Potentiale der Elektroden mit Metallfunktion (Nummern 2 und 11 in der Tabelle 2).

Die Beibehaltung der hohen Betriebsstabilität und der Austauschbarkeit der Glaselektroden bei gesteigerten Temperaturen wird durch Beobachtungsdaten bestätigt, die in den Tabellen 3 bis 5 enthalten sind. Die Tabellen 3 und 4 enthalten Beobachtungsdaten beim Elektrodenbetrieb bei einer Temperatur von 70°C und die Tabelle 5 Beobachtungsdaten beim Betrieb von Elektroden, die vor jeder Messung bis zu 150°C erwärmt worden sind.

### Gewerbliche Anwendbarkeit

Die erfindungsgemäße Glaselektrode zum Messen der Ionenaktivität in Lösungen kann in der Laborpraxis und in Fertigungsverfahren mehrerer Industriezweige, wie z.B. der Nahrungsmittel-, Zellstoff- und Papierindustrie, mikrobiologischen, pharmazeutischen Industrie usw. zu einem breiten Einsatz kommen.

Tabelle 3

Potentiale von Glaselektroden mit $H^+$ - Funktion (Membranglas Typ II) mit Innenbedeckung durch LiIn- Legierung (0,2 Molanteile Li) bei einer Temperatur von $70^oC$ in einer Lösung 0,1 Mol/1 HCl

| Beobacht-ungstag | Beobachtungs-dauer, Stunde | -E, mV | | |
|---|---|---|---|---|
| | | Nr 1 | Nr 2 | Nr 3 |
| 1.Tag | 0 | 2022 | 2019 | 2024 |
| | 2 | 2023 | 2021 | 2025 |
| | 4 | 2023 | 2021 | 2025 |
| | 5,5 | 2022 | 2021 | 2025 |
| 2.Tag | 0 | 2021 | 2020 | 2023 |
| | 2 | 2020 | 2019 | 2022 |
| | 4 | 2020 | 2020 | 2022 |
| | 6 | 2020 | 2020 | 2024 |
| 3.Tag | 0 | 2021 | 2019 | 2023 |
| | 2 | 2021 | 2020 | 2023 |
| | 4 | 2020 | 2019 | 2022 |
| | 4,5 | 2020 | 2019 | 2022 |

Tabelle 4

Potentiale von Glaselektroden mit $Na^+$ - Funktion (Membranglas Typ I) mit Innenbedeckung durch NaIn- Legierung (0,2 Molanteile Na) bei einer Temperatur von $70^oC$ in einer Lösung 0,3 Mol/1 NaCl.

| Beobacht-ungstag | Beobachtungs-dauer, Stunde | -E, mV | | |
|---|---|---|---|---|
| | | Nr 1 | Nr 2 | Nr 3 |
| 1.Tag | 0 | 2551 | 2554 | 2550 |
| | 2 | 2552 | 2554 | 2553 |
| | 4 | 2552 | 2554 | 2553 |
| | 6 | 2552 | 2554 | 2553 |

| Beobacht-ungstag | Beobachtungs-dauer, Stunde | -E, mV | | |
|---|---|---|---|---|
| | | Nr 1 | Nr 2 | Nr 3 |
| 2.Tag | 0 | 2552 | 2554 | 2554 |
| | 2 | 2552 | 2554 | 2554 |
| | 4 | 2552 | 2554 | 2553 |
| | 6 | 2552 | 2553 | 2553 |
| 3.Tag | 0 | 2549 | 2552 | 2551 |
| | 2 | 2550 | 2552 | 2552 |
| | 4 | 2550 | 2552 | 2551 |
| | 6 | 2550 | 2552 | 2551 |

Tabelle 5

Potentiale von Glaselektroden mit $Na^+$-Funktion (Membranglas Typ I) mit Innenbedeckung durch NaIn-Lösung (0,2 Molanteile Na) nach einer periodischen Erwärmung in Luft bei $150^{\circ}C$. Messungen in einer Lösung 0,3 Mol/1 NaCl

| Erwärmungs-dauer, Stunden | Gesamte Erwärm-ungszeit, Stunden | -E, mV | | |
|---|---|---|---|---|
| | | Nr 1 | Nr 2 | Nr 3 |
| 6 | 6 | 2532 | 2531 | 2532 |
| 6 | 12 | 2533 | 2532 | 2533 |
| 8 | 20 | 2536 | 2535 | 2535 |
| 9 | 29 | 2535 | 2533 | 2535 |
| 5 | 34 | 2535 | 2533 | 2534 |
| 7 | 41 | 2535 | 2534 | 2534 |
| 5 | 46 | 2534 | 2533 | 2532 |
| 4 | 50 | 2535 | 2534 | 2532 |

## PATENTANSPRUCH

Glaselektrode zum Messen der Ionenaktivität in einer Lösung mit einer Membran aus ionenleitendem Alkaliglas, deren innere Fläche mit einem Feststoff überzogen ist, der ein zur Zusammensetzung des Membranglases gehörendes Alkalimetall enthält, und einem stromleitenden Element, das mit dem Feststoff in Kontakt steht, d a d u r c h   g e k e n n - z e i c h n e t , daß der Stoff des Überzugs (3) zusätzlich ein Nichtalkalimetall enthält, das aus der Gruppe Zinn, Indium gewählt wird, wobei das Alkali- und das Nichtalkalimetall ein Molverhältnis von 0,01 bis 0,2 aufweist.

FIG.1

FIG.2

**I. CLASSIFICATION OF SUBJECT MATTER** (If several classification symbols apply, indicate all) [6]

According to International Patent Classification (IPC) or to both National Classification and IPC

IPC[4] G 01 N 27/36

**II. FIELDS SEARCHED**

Minimum Documentation Searched [7]

| Classification System | Classification Symbols |
|---|---|
| IPC[4] | G 01 N 27/28, 27/30, 27/32, 27/36 |

Documentation Searched other than Minimum Documentation
to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | SU, A1, 60097, (E.M. Skobets et al.), 31 May 1941 (31.05.41) | 1 |
| A | FR, A1, 2349548, (VSESOJUZNOE NAUCHNO-PROIZVODSTVENNOE OBIEDINENIE TSELLJULOZNO-BUMAZHNOI PROMYSHLENNOSTI) , 25 November 1977 (25.11.77), see the claims | 1 |
| A | DE, C3, 2134101, (NIKOLSKIJ BORIS PETROWITSCH et al.), 23 October 1975 (23.10.75) see the claims | 1 |
| A | SU, A1, 1318899, (KIROVSKI POLITEKNICHESKI), 23 June 1987 (23.06.87), see example 1 | 1 |

* **Special categories of cited documents:** [10]

"A" document defining the general state of the art which is not considered to be of particular relevance

"E" earlier document but published on or after the International filing date

"L" document which may throw doubts on priority claim(s) or which is cited to establish the publication date of another citation or other special reason (as specified)

"O" document referring to an oral disclosure, use, exhibition or other means

"P" document published prior to the International filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 6 March 1989 (06.03.89) | 3 April 1989 (03.04.89) |
| International Searching Authority | Signature of Authorized Officer |
| ISA/SU | |

Form PCT/ISA/210 (second sheet) (January 1985)